# DEMANDE DE BREVET EUROPEEN

(11) **EP 1 153 562 A2**
(43) Date de publication de la demande: **14.11.2001**
(21) Numéro de dépôt: 01401178.7
(22) Date de dépôt: 09.05.2001
(51) Int. Cl.: A47J 36/26

(54) **Appareil électroménager permettant le chauffage automatique à la température de consommation du liquide ou produit contenu dans un récipient**

(30) Priorité: 10.05.2000 FR 0005931; 28.11.2000 FR 0015462
(71) Demandeur: Coulon, Jean-Claude, 93340 Le Raincy (FR)
(72) Inventeur: Coulon, Jean-Claude, 93340 Le Raincy (FR)

(57) **Abrégé**

L'appareil électroménager permettant le chauffage à la température de consommation du liquide ou produit contenu dans un récipient (9) par exemple biberon, pot ou boite, est constitué d'un réceptacle (2) dont la paroi (8) forme moyen de transfert de la chaleur, du type à sec sans l'eau d'un bain-marie, fournie par une résistance chauffante (10) alimentée par un dispositif de régulation (18) à température donnée préréglée, de façon variable en fonction des différents volumes de liquide ou produit contenu dans le récipient, la chaleur régulée fournie à la paroi (8) est transmise au contenu du récipient pendant une durée définie par des moyens de temporisation (19) programmés en fonction des différents volumes contenus dans le récipient, dont la mise en action est assurée dès que la température préréglée est atteinte pour commander au terme de celle-ci l'actionnement de moyens avertisseurs sonores (6) et/ou visuels (7) et la coupure définitive des moyens de chauffage (10). L'appareil comporte d'une part des moyens sélecteurs (5) à commande manuelle, gradués en fonction des différents volumes à chauffer reliés aux moyens de régulation (18) et aux moyens de temporisation (19), et d'autre part des moyens de présélection (4) d'au moins deux types de températures initiales effectives du liquide ou produit à chauffer selon qu'il s'agit par exemple d'un liquide ou produit à température ambiante ou conservé dans un réfrigérateur

## Description

La présente invention a pour objet un appareil électroménager permettant le chauffage à température de consommation du liquide ou produit contenu dans un récipient par exemple biberon, pot ou boite .

Jusqu'à présent pour chauffer le contenu d'un récipient tel qu'un biberon, un petit pot, une boite de conserve, on utilise généralement un appareil de chauffage à bain-marie, par exemple du type chauffe biberon qui nécessite l'utilisation systématique d'eau, ce qui se révèle peu pratique et présente des risques de brûlures par renversement de celle-ci dans le cas de voyages notamment, par exemple en avion, en train « type TGV » ou en véhicule automobile. Il existe également la faculté d'utiliser un four à micro-ondes mais cet emploi n'est possible qu'à la maison.

Aussi le besoin d'appareils n'utilisant pas d'eau et qui soient aisément transportables se fait sentir. C'est pour cette raison que de tels dispositifs ont déjà été proposés et ont fait l'objet de brevets. Ainsi le brevet FR 2709054 est relatif à un appareil destiné au chauffage de boîtes d'aliments constitué d'un boîtier cylindrique possédant un fond et une ouverture supérieure d'introduction de la boite à réchauffer, le chauffage étant assuré par une résistance électrique circulaire. Le brevet WO9747931 concerne lui un dispositif destiné au chauffage ou au refroidissement d'une boisson dans un récipient qui est pourvu d'au moins une chambre avec un mécanisme à ressort servant à presser le récipient à boisson reçu dans celle-ci contre un élément de transfert de chaleur faisant saillie dans la chambre et connecté à un élément thermoélectrique assurant sélectivement le chauffage ou le refroidissement. Enfin le brevet FR 2739245 décrit un dispositif de chauffage du liquide contenu dans un biberon à partir de la chaleur fournie par des moyens d'émission d'un rayonnement infrarouge focalisé par un réflecteur évasé.

Cependant de tels dispositifs s'ils permettent effectivement de chauffer le contenu d'un récipient tel qu'une boite ou un biberon sans l'utilisation de l'eau d'un bain-marie, ce qui en facilite l'utilisation notamment en voyage, ne prévoient pas de moyens permettant de savoir si le contenu du récipient ou biberon chauffé est à température de consommation.

L'objet de l'invention est de fournir un appareil électroménager permettant le chauffage à la température de consommation du liquide ou produit contenu dans un récipient par exemple biberon, pot ou boite, du type constitué d'un réceptacle disposé dans une enveloppe, destiné à contenir dans son évidement un récipient par exemple un biberon contenant un liquide à chauffer, la paroi dudit réceptacle formant un moyen de transfert de la chaleur, du type à sec c'est à dire sans l'eau d'un bain-marie, fournie par des moyens électriques de chauffage par exemple du type résistance chauffante, caractérisé en ce que la paroi du réceptacle s'étend sur une hauteur correspondant sensiblement à la hauteur maximale atteinte dans le récipient le plus haut destiné à être reçu dans le réceptacle, et en ce que d'une part, les moyens électriques de chauffage sont alimentés par un dispositif de régulation de leur alimentation à température donnée préréglée en fonction des différents volumes de liquide ou produit contenu dans le récipient, nettement supérieure à la température de consommation souhaitée du liquide ou produit à chauffer, et en ce que d'autre part, la chaleur régulée fournie à la paroi est destinée à être transmise au récipient et au liquide ou produit qu'il contient jusqu'à ce que ledit liquide ou produit atteigne la température souhaitée, pendant une durée définie par des moyens de temporisation à durées programmées en fonction des différents volumes contenus dans le récipient, dont la mise en action est assurée dès que la température préréglée est atteinte pour commander au terme de celle-ci d'une part l'actionnement de moyens avertisseurs sonores et/ou visuels signalant alors que la température souhaitée est atteinte et d'autre part la coupure définitive du dispositif de régulation et par suite celle des moyens de chauffage, et en ce que l'appareil comporte des moyens sélecteurs à commande manuelle, gradués en fonction des différents volumes à chauffer reliés d'une part aux moyens de régulation et d'autre part aux moyens de temporisation, ainsi que des moyens de présélection d'au moins deux types de températures initiales effectives du liquide ou produit à chauffer selon qu'il s'agit par exemple d'un liquide ou produit à température ambiante ou au contraire conservé dans un réfrigérateur.

Selon d'autres caractéristiques :
- Les durées de temporisation avant commande des moyens avertisseurs sonores et/ou visuels signalant que la température de consommation souhaitée est atteinte sont préétalonnées en fonction des divers volumes de liquide contenus dans le récipient, d'une part pour une température initiale du liquide à chauffer de type basse et d'autre part avec des durées plus réduites pour des températures initiales plus élevées et en ce que ces durées sont mises en mémoire soit dans un dispositif de temporisation commun à au moins deux dispositifs distincts de commande, soit mises en mémoire, les premières dans un premier dispositif associé au dispositif de commande correspondant à une température initiale basse et les secondes dans au moins un deuxième dispositif associé au dispositif de commande correspondant à une température initiale plus élevée de type ambiante.
- Les moyens de transfert de chaleur sont constitués par la paroi intérieure elle-même du réceptacle réalisée en matériau conducteur de chaleur tel que par exemple l'aluminium, le cuivre, l'acier inoxydable, et comportant une section intérieure très légèrement supérieure à celle du récipient à recevoir, et en ce que les moyens électriques de mise en température de la paroi sont constitués de résistances accolées extérieurement en au moins une épaisseur sur la dite paroi ou incorporées dans l'épaisseur de celle-ci sur au moins une partie de sa hauteur.
- Selon un mode de réalisation, la paroi du réceptacle est réalisée en une seule partie sur l'extérieur de laquelle un collier chauffant s'étend à partir de sa base sur au moins une partie de sa hauteur et en ce que le dispositif de régulation régule la température de la paroi entre une température minimum correspondant à un volume partiel à chauffer dans le récipient telle qu'elle évite la « surchauffe » de la partie du récipient au dessus du niveau du liquide ou produit contenu, préjudiciable à la préhension et une valeur maximum beaucoup plus élevée correspondant elle au remplissage total du récipient dont la totalité de la paroi est alors au contact du liquide ou produit.
- Les moyens électriques de chauffage sont constitués d'au moins deux résistances chauffantes et de préférence trois disposées de façon superposées réparties coaxialement à l'axe du réceptacle et le dispositif de régulation commande sélectivement en fonction de la position donnée manuellement aux moyens sélecteurs gradués en fonction des différents volumes à chauffer :

- soit l'alimentation de la seule résistance inférieure lorsque le niveau du liquide à chauffer est réduit,
- soit l'alimentation de la résistance inférieure et de la résistance intermédiaire lorsque le niveau de liquide se situe dans la zone intermédiaire du biberon
- soit enfin l'alimentation simultanée de la résistance inférieure, de la résistance intermédiaire et de la résistance supérieure lorsque le niveau de liquide à chauffer se situe dans la zone supérieure du biberon.
- Selon un autre mode de réalisation préférentiel, les résistances superposées verticalement sont séparées entre elles et la paroi du réceptacle est elle-même subdivisée en un nombre correspondant de parties cylindriques espacées axialement selon l'axe du réceptacle et dans les dits espaces sont intercalés des moyens isolants.

Ces moyens isolants sont réalisés soit :
- sous forme de bagues ou de cales isolantes par exemple en « Bakélite » ou en matériau réfractaire servant à éviter la transmission de la chaleur d'un segment de la paroi de réceptacle à un segment immédiatement supérieur lors de l'utilisation sélective des résistances chauffantes suivant la quantité de liquide à chauffer, lesdits segments de réceptacle superposés se situant chacun en vis à vis de la ou lesdites résistances de niveau correspondant, de sorte à éviter une surchauffe de la zone supérieure d'un biberon lorsqu'elle ne contient pas de liquide et par suite tout risque de brûlure lors de la préhension dudit biberon tout en permettant d'utiliser sans risque une température de chauffe élevée quelque soit le niveau de liquide à chauffer contenu. Ces moyens isolants interposés entre les tronçons cylindriques de la paroi de transfert présentent préférentiellement d'une part des évidements permettant l'emboîtement des dits tronçons assurant ainsi leur maintien coaxial et d'autre part des prolongements latéraux vers l'extérieur destinés à séparer et isoler également entre elles les résistances.
- sous forme de moyens isolants et d'étanchéité comportant :- d'une part, d'une bague en matériau élastique de type caoutchouc ou silicone résistant aux fortes températures, qui présente une ouverture centrale d'un diamètre correspondant à celui du corps du biberon de sorte à définir une lèvre en appui étanche horizontalement sur tout le tour du corps du biberon de sorte à créer une barrière ou « sas» s'opposant à la montée naturelle de l'air réchauffé dans la chambre annulaire inférieure ménagée entre le corps du biberon et la paroi intérieure du chauffe biberon, vers la chambre immédiatement supérieure, et de même entre cette dernière et la chambre qui la surmonte, et d'autre part, situées de part et d'autre de la dite bague élastique, des plaques réflectrices renvoyant la chaleur rayonnée, respectivement par la résistance inférieure au sein de la chambre annulaire inférieure et non au delà de celle-ci ; chacune de ces plaques présentant une ouverture centrale de passage du corps du biberon, de diamètre légèrement supérieur à celui défini par le bord intérieur de la lèvre intérieure de la bague élastique et inférieur à celui de la paroi intérieure de la chambre.
- Chaque élément chauffant peut lui-même être constitué d'au moins deux résistances distinctes dont l'alimentation simultanée ou non est commandée à partir de la position donnée au sélecteur de température de départ du liquide à chauffer de sorte à ce qu'en cas d'utilisation avec un liquide à température initiale ambiante, seule l'une des résistances est alimentée et dans le cas d'une utilisation avec un liquide à température basse par exemple correspondant à celle d'un réfrigérateur, le dispositif commande l'alimentation simultanée des deux résistances afin que les durées de chauffage et de temporisation soient réduites.
- L'appareil comporte en outre intérieurement à l'enveloppe une isolation thermique et/ou des moyens réflecteurs disposés extérieurement à la paroi du réceptacle et aux résistances pour concentrer la chaleur sur la paroi intérieure du réceptacle et vers le récipient.
- Sur l'appareil, en outre, est prévu un bandeau de sécurité isolant qui surmonte le bord supérieur de la paroi du réceptacle afin d'éviter tout contact des doigts avec ledit bord et par suite tout risque de brûlure pour l'utilisateur lors du retrait du récipient après chauffage hors du réceptacle.
- Le réceptacle est pourvu d'un fond réalisé en matériau isolant et comporte une cavité destinée à recevoir notamment la partie inférieure de biberons du type à fond amovible vissant et la profondeur et la section intérieur de ladite cavité sont prévues légèrement supérieures à la hauteur et à la section du dit fond.
- L'appareil comporte un couvercle destiné à coiffer le réceptacle pourvu intérieurement d'un évidement permettant d'y loger la partie supérieure dépassante du récipient notamment la partie tétine d'un biberon afin notamment d'éviter des déperditions et d'accroître l'efficacité du transfert de chaleur du réceptacle vers le récipient.
- Le réceptacle est prévu soit unique et associé à une commande manuelle de réglage graduée en fonction du volume de liquide ou produit à chauffer, et à un sélecteur de température de départ du liquide ou produit à chauffer, soit comporte deux réceptacles distincts affectés chacun à une température initiale de liquide différente, correspondant respectivement à la température ambiante et à la température d'un réfrigérateur dont les moyens individuels de chauffage, de régulation et de temporisation sont commandés à partir de deux commandes distinctes manuelles graduées de réglage en fonction du volume de liquide à chauffer, distinctes et adaptées aux températures correspondantes.
- la puissance des moyens de chauffage est de préférence choisie à une valeur maximum afin que la durée nécessaire pour atteindre la température préréglée de régulation soit la plus courte possible de sorte à favoriser l'échange de chaleur entre le réceptacle et le contenu du récipient essentiellement pendant la phase de temporisation, permettant d'atteindre rapidement la température souhaitée.
- les moyens de présélection de température initiale du produit à chauffer comportent de préférence au moins 3 positions de présélection, la première correspondant à celle d'un réfrigérateur, la seconde à une température intermédiaire et la troisième à une température ambiante.

A titre d'illustration des dessins sont joints qui représentent :
- figure 1 : une vue en perspective du dispositif à un seul réceptacle dans lequel est reçu un biberon
- figure 2 : une vue en perspective de la variante à deux réceptacles distincts adaptés chacun à des températures initiales du liquide à chauffer distincts
- figure 3 : une vue en coupe axiale de la partie réceptacle du dispositif équipé d'un couvercle isolant.
- figure 4 : une vue en coupe axiale d'une variante de réalisation de celle illustrée en figure 3 dans le cas où la paroi du réceptacle et les moyens de chauffage sont segmentés avec vue en détail A un mode particulier de réalisation des moyens isolants interposés entre les moyens de chauffage assurant également une étanchéité entre le corps du biberon et chaque segment de chambre

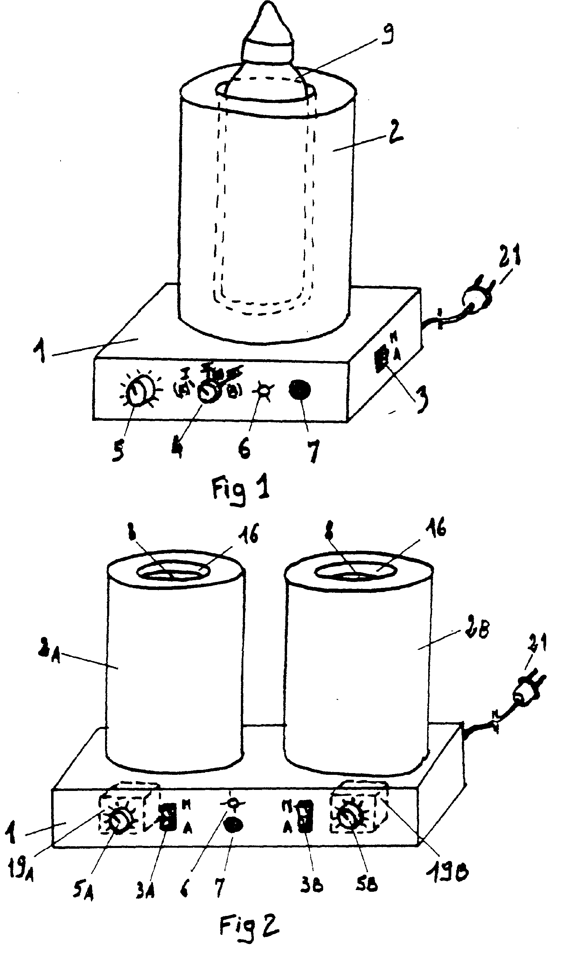

En référence à ces dessins, l'appareil se compose d'un socle (1) contenant les circuits électriques de commande au dessus duquel est disposé soit un réceptacle (2) (figure 1) soit deux réceptacles distincts (2A) (2B) (figure 2) ouverts à leur partie supérieure pour permettre d'y placer soit un biberon, une boite contenant un aliment ou une boisson ou un petit pot maintenu dans ce cas par un support accessoire de surélévation. Leur chauffage à température de consommation par moyens électriques est commandé au niveau du socle (1) à partir soit d'un interrupteur (3) unique associé à un sélecteur (4) de type de température initiale du produit à chauffer, soit de deux interrupteurs (3A) (3B) formant simultanément sélecteurs et d'au moins une commande de réglage graduée (5) comme illustré en figure 1 ou de deux commandes distinctes (5A) (5B) dans le cas de la figure (2) à deux réceptacles permettant de sélectionner la quantité de produit à chauffer. En outre sur le socle sont prévus un avertisseur lumineux (6) et sonore (7) actionnés lorsque la température du contenu du récipient à chauffer, atteint la valeur choisie.

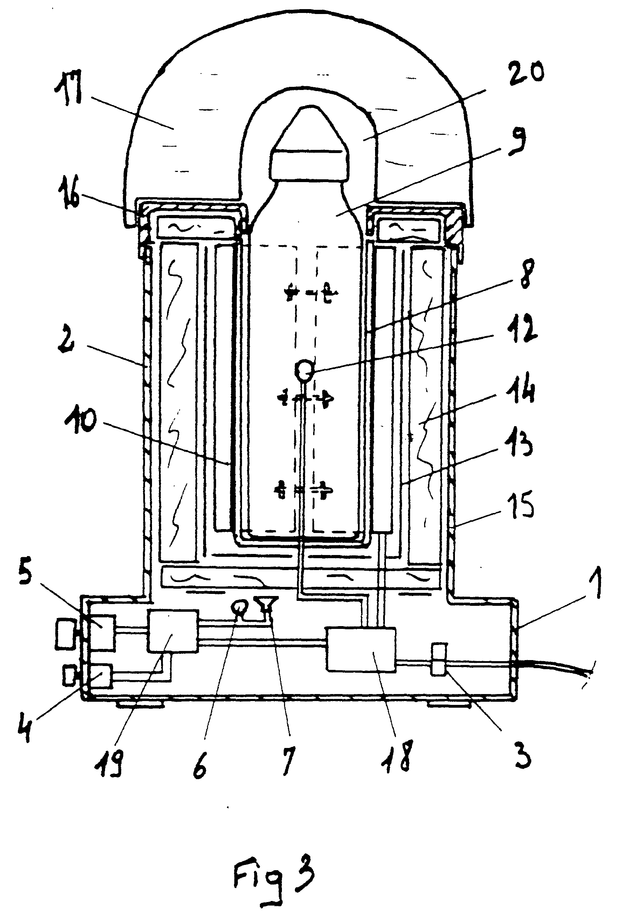

Selon un premier mode de réalisation simplifié, intérieurement au(x) réceptacle(s) (2) (2A) (2B) est disposé comme illustré en figure 3 un corps cylindrique avec fond dont la paroi (8) est réalisée en matériau bon conducteur de la chaleur tel que par exemple le cuivre, l'aluminium, l'acier inoxydable pourvu éventuellement intérieurement d'un revêtement noir de sorte à accroître la capacité de radiation de la chaleur vers le contenu du récipient (9) placé au centre de ce corps cylindrique à faible distance de sa paroi (8).

Afin d'assurer la mise en température du corps de transfert de chaleur (8) du réceptacle (2) dans le mode de réalisation illustré, une résistance chauffante (10) est appliquée à sa surface extérieure sous forme de un ou de collier(s) pourvu(s) de moyen de serrage (11) éventuels afin d'avoir un contact maximum avec le corps (8) du réceptacle. D'autre part une sonde de température (12) est accolée ou incorporée de préférence dans la partie centrale de la paroi intérieure du corps (8) afin de fournir une information de la température effective atteinte par ce corps à un dispositif de régulation (18).

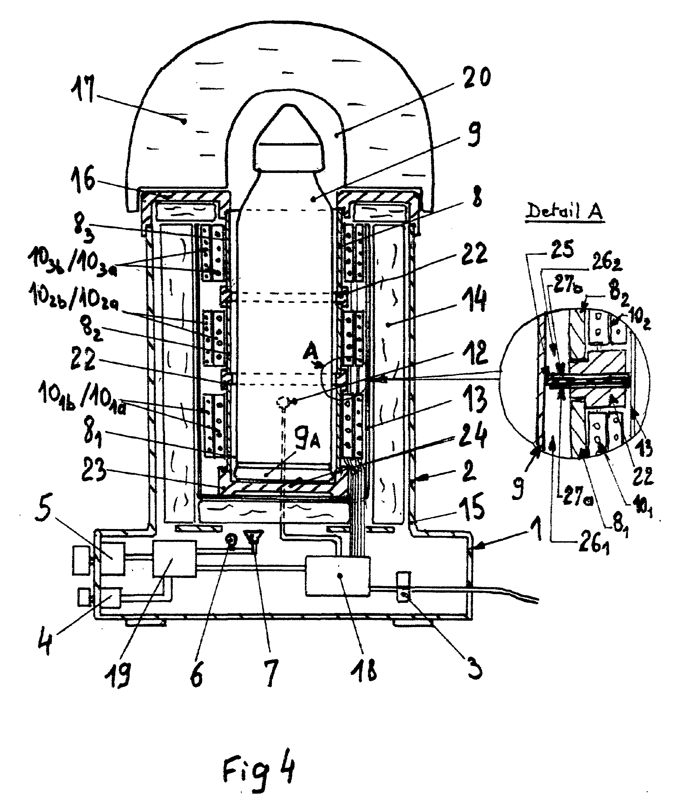

Contrairement au cas de la figure 3 où la paroi (8) du réceptacle est réalisée en une seule partie y compris avec le fond, dans la variante préférentielle illustrée en figure 4, la paroi (8) est segmentée en trois tronçons cylindriques (8-1) (8-2) (8-3) superposés et espacés entre eux. Dans les dits espaces sont interposés préférentiellement des moyens isolants (22) assurant en outre le calage des tronçons cylindriques entre eux réalisés par exemple sous forme de bagues ou de cales avec des parties évidées permettant éventuellement un emboîtement assurant le maintien coaxial des tronçons cylindriques et ces dites bagues s'étendent de préférence latéralement vers l'extérieur de sorte à séparer également les résistances entre elles. De même le fond du réceptacle (2) est réalisé en matériaux isolant (23). Dans le cas où le dispositif est prévu pour être utilisé avec des biberons (9) à fond amovible vissant, ledit fond isolant (23) est pourvu d'une cavité (24) de dimensions telles qu'elles permettent de loger le fond amovible (9-A) du biberon sur toute la hauteur de sa partie vissante afin d'éviter lors du chauffage la déformation de cette partie et par suite tout risque de fuite. Par ailleurs selon ce mode de réalisation les différents tronçons (8-1) (8-2) (8-3) sont pourvus extérieurement chacun d'un moyen de chauffage distinct respectivement (10-1) (10-2) (10-3). De plus chaque élément de chauffage est réalisé préférentiellement sous la forme de deux résistances électriques disposés par exemple de façon concentrique, la résistance intérieure respectivement (10-1a) (10-2a) (10-3a) pouvant être alimentée seule ou simultanément avec la résistance complémentaire (10-1b) (10-2b) (10-3b) notamment selon que la température initiale du liquide à chauffer dans le biberon (9) est à température ambiante ou au contraire à température basse. En variante chaque résistance (10-1) (10-2) (10-3) peut être prévue unique et dans ce cas la durée de chauffe et/ou la puissance électrique est augmentée en cas de besoin pour le chauffage d'un liquide à température initiale basse afin d'obtenir, même dans ce cas, des temps de chauffage courts.

L'intérêt d'un réceptacle et de moyens de chauffage segmentés verticalement et alimentés de façon sélective est qu'il permet d'adapter de façon optimum les conditions de chauffage du liquide contenu dans le biberon (9) quelque soit le niveau du liquide atteint dans le biberon de sorte à ne chauffer que la zone de la paroi du biberon située en vis à vis du liquide contenu et où s'effectue un échange de température entre parois verre ou plastique du biberon et le liquide contenu et non dans les zones de paroi non situées en vis à vis de liquide, où en l'absence d'échange de chaleur, la température qui pourrait être atteinte par ladite paroi risquerait de provoquer des brûlures lors de la préhension du biberon par l'utilisateur par sa partie haute tout en évitant par ailleurs un déformation de cette paroi notamment lorsqu'elle est réalisée en plastique.

En effet, lorsque le niveau de liquide contenu ne dépasse par exemple pas le tiers de la contenance du biberon (9), le réglage du bouton de commande (5), (5a) ou (5b) sur la contenance correspondante commandera, via le dispositif de régulation (18), l'alimentation de la seule résistance inférieure (10-1) que celle-ci soit simple (10-1a) ou double (10-1a), (10-1b). De la même manière dans le cas où le niveau de liquide contenu atteint la zone médiane du biberon, le déplacement manuel du bouton (5), (5a) ou (5b) en vis à vis des graduations de volume correspondantes déclenchera alors l'alimentation simultanée des résistances inférieures (10-1), (10-1a) (10-1b) et des résistances médianes (10-2), (10-2a) et/ou non (10-2b). Enfin dans le cas où le niveau de liquide atteint la zone supérieure du biberon (9) on obtient alors par déplacement du bouton (5), (5a) (5b) en vis à vis des graduations les plus élevées, l'alimentation de l'ensemble des résistances inférieures (10-1), médianes (10-2) et supérieures (10-3), (10-3a) et/ou non (10-3b).

En vue de réduire encore la transmission de la chaleur sur la partie haute du biberon ne contenant pas de liquide tout en améliorant l'efficacité du chauffage de la partie inférieure du biberon contenant le lait, il est représenté en Détail A disposé latéralement à la figure 4, un mode particulier de réalisation au niveau de chaque moyen isolant 22 évitant la transmission de la chaleur du segment inférieur (8-1) de la paroi intérieure (8) du chauffe biberon au suivant (8-2), puis (8-3) situés en vis à vis des résistances (10-1) (10-2) (10-3). Selon ce mode de réalisation, il est prévu :
- d'une part, une bague en matériau élastique (25) de type caoutchouc ou silicone résistant aux fortes températures pourvue d'une ouverture centrale d'un diamètre correspondant à celui du corps (9) du biberon de sorte à définir une lèvre en appui étanche horizontalement sur tout le tour du corps dudit biberon de sorte à créer une barrière ou un « sas » s'opposant à la montée naturelle de l'air réchauffé dans la chambre annulaire inférieure (26-1) ménagée entre le corps (9) du biberon et le segment de paroi (8-1) intérieure du chauffe biberon, vers la chambre immédiatement supérieure (26-2), et de même entre cette dernière et la chambre haute (26-3),
- d'autre part, situées de part et d'autre de la dite bague élastique (25) des plaques réfléchissantes (27-a) (27-b) renvoyant la chaleur rayonnée, respectivement par la résistance (10-1) au sein de la chambre (26-1) et non au delà de celle-ci . Chacune de ces plaques (27-a) (27-b) présentent une ouverture centrale de passage du corps (9) du biberon, de diamètre légèrement supérieur à celui défini par la lèvre formant le bord intérieur de l'orifice de la bague élastique (25), et de diamètre inférieur à celui de la paroi intérieure segmentée (8).

Cet ensemble peut : - soit, compléter comme illustré en Détail A, des moyens isolants (22) de type réfractaire en étant pris en sandwich ou supporté par les moyens (22) réalisés en deux parties comme illustré, ou en une seule partie,
- soit, constituer à lui seul les dits moyens (22) selon une variante de réalisation non représentée ; de préférence en ménageant un espace libre entre chaque réflecteur (27-a) (27-b) et le tronçon, respectivement (8-1) (8-2) en vis à vis pour limiter toute transmission de chaleur.

Dans tous les cas, extérieurement au corps (8), (8-1) (8-2) (8-3) et aux résistances (10), (10-1) (10-2) (10-3) ainsi que sous ceux-ci sont disposés préférentiellement une paroi formant réflecteur (13) puis un matériau isolant (14) par exemple en laine de roche enfermés dans la paroi (15) formant l'enveloppe extérieure du réceptacle (2) . De plus, afin d'éviter tout contact direct des doigts de l'utilisateur avec le corps accumulateur (8) lors de l'introduction ou de la sortie d'un biberon (9), cette paroi (8) ne s'étend pas jusqu'à la partie haute du réceptacle (2) mais est surmonté d'une bague isolante de protection (16) fixée extérieurement à la paroi (15). En outre peut-être prévu un couvercle (17) isolant et évidé dans sa partie intérieure (20) venant coiffer le réceptacle (2) et envelopper la partie tétine du biberon (9) faisant saillie hors du réceptacle (2) afin de permettre un chauffage plus rapide du récipient (9) en évitant les déperditions.

Le mode de fonctionnement est le suivant : après avoir actionné le contact (3), la résistance chauffante (10) est alimentée à partir de la prise électrique (21) ou d'une prise d'allume-cigare pour véhicule, via le dispositif de régulation (18) jusqu'à ce que la sonde (12) détecte au niveau du corps (8) ou au moins du corps inférieur (8-1) du réceptacle (2) que la température programmée fixe ou variable en fonction du volume à chauffer sélectionné et de la température de départ du liquide à chauffer, est atteinte, ce qui commande alors le début de la période de transfert de chaleur régulée par le dispositif (18), du corps (8) ou (8-1) (8-2) (8-3) vers le récipient (9) déterminée par l'alimentation sélective du ou d'un des moyens de temporisation (19) (19A) (19B) pour une durée définie d'une part à partir de la position donnée par l'utilisateur au sélecteur (4) de température initiale et d'autre part préprogrammée en fonction de la quantité de liquide à chauffer sélectionnée manuellement préalablement à partir du ou des boutons (5) (5A) ou (5B), et au terme de celle-ci les avertisseurs visuels (6) et sonores (7) sont alimentés de sorte que l'utilisateur est averti que le contenu du récipient (9) a atteint automatiquement la température de consommation recherchée sans autre manipulation de la part de l'utilisateur à la suite d'une phase d'échange thermique entre le corps (8) du réceptacle (2)et le contenu du récipient (9) coupant alors définitivement l'alimentation du dispositif de régulation (18) et de la résistance électrique (10).

## Revendications

1. Appareil électroménager permettant le chauffage à la température de consommation du liquide ou produit contenu dans un récipient par exemple biberon, pot ou boite, du type constitué d'un réceptacle (2) disposé dans une enveloppe (15), destiné à contenir dans son évidement un récipient par exemple un biberon contenant un liquide à chauffer, la paroi dudit réceptacle (2) formant un moyen de transfert de la chaleur, du type à sec c'est à dire sans l'eau d'un bain-marie, fournie par des moyens électriques de chauffage par exemple du type résistance chauffante (10), **caractérisé en ce que** la paroi (8) du réceptacle (2) s'étend sur une hauteur correspondant sensiblement à la hauteur maximale atteinte dans le récipient le plus haut destiné à être reçu dans le réceptacle (2), et **en ce que** d'une part, les moyens électriques de chauffage(10) sont alimentés par un dispositif de régulation (18) de leur alimentation à température donnée préréglée en fonction des différents volumes de liquide ou produit contenu dans le récipient, nettement supérieure à la température de consommation souhaitée du liquide ou produit à chauffer, et **en ce que** d'autre part, la chaleur régulée fournie à la paroi (8) est destinée à être transmise au récipient et au liquide ou produit qu'il contient jusqu'à ce que ledit liquide ou produit atteigne la température souhaitée, pendant une durée définie par des moyens de temporisation (19) à durées programmées en fonction des différents volumes contenus dans le récipient, dont la mise en action est assurée dès que la température préréglée est atteinte pour commander au terme de celle-ci d'une part l'actionnement de moyens avertisseurs sonores (6) et/ou visuels (7) signalant alors que la température souhaitée est atteinte et d'autre part la coupure définitive du dispositif de régulation (18) et par suite celle des moyens de chauffage (10), et **en ce que** l'appareil comporte des moyens sélecteurs (5) à commande manuelle, gradués en fonction des différents volumes à chauffer reliés d'une part aux moyens de régulation (18) et d'autre part aux moyens de temporisation (19), ainsi que des moyens de présélection (4) d'au moins deux types de températures initiales effectives du liquide ou produit à chauffer selon qu'il s'agit par exemple d'un liquide ou produit à température ambiante ou au contraire conservé dans un réfrigérateur, et **en ce que** les durées de temporisation avant commande des moyens avertisseurs sonores (6) et/ou visuels (7) signalant que la température de consommation souhaitée est atteinte sont préétalonnées en fonction des divers volumes de liquide contenus dans le récipient, d'une part pour une température initiale du liquide à chauffer de type basse et d'autre part pour des températures initiales plus élevées et **en ce que** ces durées sont mises en mémoire soit dans un dispositif de temporisation commun (19) à au moins deux dispositifs distincts de commande, soit mises en mémoire, les premières dans un premier dispositif (19A) associé au dispositif de commande correspondant à une température initiale basse et les secondes dans au moins un deuxième dispositif (19B) associé au dispositif de commande correspondant à une température initiale plus élevée de type ambiante.

2. Appareil électroménager selon la revendication 1 **caractérisé en ce que** les moyens de transfert de chaleur sont constitués par la paroi intérieure (8), (8-1), (8-2), (8-3) elle-même du réceptacle (2), réalisée en matériau conducteur de chaleur tel que par exemple l'aluminium, le cuivre, l'acier inoxydable, comportant une section intérieure très légèrement supérieure à celle du récipient à recevoir, et **en ce que** les moyens électriques de mise en température de la paroi (8), (8-1), (8-2), (8-3) sont constitués de résistances (10) accolées extérieurement en au moins une épaisseur sur la dite paroi ou incorporées dans l'épaisseur de celle-ci sur au moins une partie de sa hauteur.

3. Appareil électroménager selon la revendication 1 ou 2 **caractérisé en ce que** les moyens électriques de chauffage sont constitués d'au moins deux résistances chauffantes (10-1) (10-2) et de préférence trois (10-1) (10-2) (10-3) disposées de façon superposées réparties coaxialement à l'axe du réceptacle (2) et **en ce que** le dispositif de régulation (18) commande sélectivement en fonction de la position donnée manuellement aux moyens sélecteurs (5) gradués en fonction des différents volumes à chauffer :
- soit l'alimentation de la seule résistance inférieure (10-1) lorsque le niveau du liquide à chauffer est réduit,
- soit l'alimentation de la résistance inférieure (10-1) et de la résistance intermédiaire (10-2) lorsque le niveau de liquide se situe dans la zone intermédiaire du biberon,
- soit enfin l'alimentation simultanée de la résistance inférieure (10-1) de la résistance intermédiaire (10-2) lorsque le niveau de liquide à chauffer se situe dans la zone supérieure du biberon,
et **en ce que** lesdites résistances (10-1) (10-2) (10-3) superposées verticalement sont séparées entre elles et **en ce que** la paroi (8) du réceptacle (2) est elle-même subdivisée en un nombre correspondant de parties cylindriques (8-1) (8-2) (8-3) espacées axialement selon l'axe du réceptacle (2) et **en ce que** dans les dits espaces sont intercalés des moyens isolants (22) servant à éviter la transmission de la chaleur d'un segment de la paroi (8) de réceptacle (2) à un segment immédiatement supérieur lors de l'utilisation sélective des résistances chauffantes suivant la quantité de liquide à chauffer, lesdits segments de réceptacle superposés (8-1) (8-2) (8-3) se situant chacun en vis à vis de la ou lesdites résistances de niveau correspondant, de sorte à éviter une surchauffe de la zone supérieure d'un biberon lorsqu'elle ne contient pas de liquide et par suite tout risque de brûlure lors de la préhension du dit biberon tout en permettant d'utiliser sans risque une température de chauffe élevée quelque soit le niveau de liquide à chauffer contenu, et **en ce que** les moyens isolants (22) sont soit réalisés sous forme de bagues ou de cales isolantes par exemple en « Bakélite » ou en matériau réfractaire et/ou de moyens isolants et d'étanchéité comportant : - d'une part, une bague en matériau élastique (25) de type caoutchouc ou silicone résistant aux fortes températures pourvue d'une ouverture centrale d'un diamètre correspondant à celui du corps (9) du biberon de sorte à définir une lèvre en appui étanche sur tout le tour horizontal du corps du biberon de sorte à créer une barrière ou « sas » s'opposant à la montée naturelle de l'air réchauffé dans la chambre annulaire inférieure (26-1) ménagée entre le corps du biberon et le segment paroi intérieure (8-1) correspondant du chauffe biberon vers la chambre immédiatement supérieure (26-2) et de même entre cette dernière et la chambre annulaire haute (26-3), et de diamètre inférieur à celui de la paroi intérieure segmentée (8), - d'autre part, situées de part et d'autre de la dite bague élastique (25) des plaques réflectrices (27-a) (27-b) de renvoi de la chaleur rayonnée, chacune de ces plaques présentant une ouverture centrale de passage du corps (9) du biberon de diamètre légèrement supérieur à celui défini par la lèvre formant le bord intérieur de l'orifice de la bague élastique (25) et inférieur à celui de la paroi segmentée intérieure (8)

4. Appareil électroménager selon la revendication 3 **caractérisée en ce que** les moyens isolants (22) interposés entre les tronçons cylindriques (8-1) (8-2) (8-3) de la paroi de transfert présentent d'une part des évidements permettant l'emboîtement des dits tronçons assurant ainsi leur maintien coaxial et d'autre part des prolongements latéraux vers l'extérieur destinés à séparer et isoler également entre elles les résistances (8-1) (8-2) (8-3).

5. Appareil électroménager selon la revendication 1 ou 2 **caractérisé en ce que** la paroi (8) du réceptacle (2) est réalisée en une seule partie sur l'extérieur de laquelle un collier chauffant (10) s'étend à partir de sa base sur au moins une partie de sa hauteur et **en ce que** le dispositif de régulation (18) régule la température de la paroi (8) entre une température minimum correspondant à un volume partiel à chauffer dans le récipient telle qu'elle évite la « surchauffe » de la partie du récipient au dessus du niveau du liquide ou produit contenu, préjudiciable à la préhension et une valeur maximum beaucoup plus élevée correspondant elle au remplissage total du récipient (9) dont la totalité de la paroi est alors au contact du liquide ou produit.

6. Appareil électroménager selon l'une quelconque des revendications précédentes **caractérisé en ce que** chaque élément chauffant (10), (10-1) (10-2) (10-3) est lui même constitué d'au moins deux résistances distinctes (10-a) (10-b) dont l'alimentation simultanée ou non est commandée à partir de la position donnée au sélecteur (4) de température de départ du liquide à chauffer, de sorte à ce qu'en cas d'utilisation avec un liquide à température initiale ambiante, seule l'une (10-a) des résistances (10-a) (10-b) est alimentée et dans le cas d'une utilisation avec un liquide à température basse par exemple correspondant à celle d'un réfrigérateur, le dispositif commande l'alimentation simultanée des deux résistances (10-a) (10-b) afin que les durées de chauffage et de temporisation soient réduites.

7. Appareil électroménager selon la revendication 1, 2 ou 3 **caractérisé en ce qu'**il comporte en outre intérieurement à l'enveloppe (15) une isolation thermique (14) et/ou des moyens réflecteurs (13) disposés extérieurement à la paroi (8) du réceptacle (2) et aux résistances (10) pour concentrer la chaleur sur la paroi intérieure du réceptacle (2) et vers le récipient (9).

8. Appareil électroménager selon l'une quelconque des revendications précédentes **caractérisé en ce qu'**en outre est prévu un bandeau de sécurité isolant (16) qui surmonte le bord supérieur de la paroi (8) du réceptacle (2) afin d'éviter tout contact des doigts avec ledit bord et par suite tout risque de brûlure pour l'utilisateur lors du retrait du récipient après chauffage hors du réceptacle (2) et **en ce que** le réceptacle (2) est pourvu d'un fond (23) réalisé en matériau isolant et qui comporte une cavité (24) destinée à recevoir notamment la partie inférieure de biberons du type à fond amovible vissant (9-A)) et **en ce que** la profondeur et la section intérieure de ladite cavité (24) sont légèrement supérieures à la hauteur et à la section du dit fond (9-A).

9. Appareil électroménager selon l'une quelconque des revendications précédentes **caractérisé en ce qu'**il comporte un couvercle (17) destiné à coiffer le réceptacle (2) pourvu intérieurement d'un évidement (20) permettant d'y loger la partie supérieure dépassante du récipient notamment la partie tétine d'un biberon afin notamment d'éviter des déperditions et d'accroître l'efficacité du transfert de chaleur du réceptacle (2) vers le récipient.

10. Appareil électroménager selon l'une quelconque des revendications précédentes **caractérisé en ce que** le réceptacle (2) est soit unique et associé à une commande manuelle de réglage (5) graduée en fonction du volume de liquide ou produit à chauffer, et à un sélecteur (4) de température de départ du liquide ou produit à chauffer, soit comporte deux réceptacles (2A) (2B) distincts affectés chacun à une température initiale de liquide différente, correspondant respectivement à la température ambiante et à la température d'un réfrigérateur dont les moyens individuels de chauffage (10), de régulation (18) et de temporisation (19A) (19B) sont commandés à partir de deux commandes distinctes manuelles graduées (5A) (5B) de réglage en fonction du volume de liquide à chauffer, distinctes et adaptées aux températures correspondantes.
